# EUROPEAN PATENT SPECIFICATION

(11) **EP 1 368 179 B1**
(45) Date of publication and mention of the grant of the patent: **18.05.2005**
(21) Application number: 01917363.2
(22) Date of filing: 13.03.2001
(51) Int. Cl.: B29C 70/44

(54) **NON-ISOTHERMAL METHOD FOR FABRICATING HOLLOW COMPOSITE PARTS**
NICHT ISOTHERMISCHES VERFAHREN ZUM HERSTELLEN VON HOHLEN VERBUNDTEILEN
PROCEDE NON ISOTHERMIQUE DE FABRICATION DE PARTIES COMPOSITES CREUSES

(43) Date of publication of application: 10.12.2003
(73) Proprietor: EMS-Chemie AG, 7013 Domat/Ems (CH)
(72) Inventor: KRUSE, Christian, CH-9477 Trübach (CH); VUILLIOMENET, Pascal, CH-1020 Renens (CH); MANSON, Jan-Anders, E., CH-1070 Puidoux (CH); WAKEMAN, Martyn, D., CH-1004 Lausanne (CH); MASKUS, Peter, CH-7013 Domat/Ems (CH)
(74) Representative: Lauer, Joachim
(86) International application number: PCT/IB2001/000528
(87) International publication number: WO 2002/072337

(56) References cited:
- WO-A-00/66347
- US-A- 4 778 073
- US-A- 5 868 878

## Description

### FIELD OF THE INVENTION

This invention relates to the field of fabricating hollow composite parts, especially space frame structures or vessels, and more particularly to improved methods for fabricating space frame structures or vessels and to composite vessels made in accordance with the improved methods.

### BACKGROUND OF THE INVENTION

Hollow composite structures, or pressure vessels, here referred to as 'vessels', such as used to store fluids and solids, particularly under pressure, such as pressurized gas tanks, or more generally in space frame or tubular, load bearing, assemblies have traditionally been fabricated from metals such as steel or aluminium. However, in recent years, the use of composite vessels has become more prevalent. Such vessels are manufactured by a variety of processes, which include filament winding, resin transfer moulding and bladder-assisted moulding.

The technology of filament winding is the process of impregnating dry reinforcing fibres, such as fibreglass or carbon strands, with an activated resin prior to application to a mandrel. Preimpregnated materials may also be used. The mixture of reinforcing fibres and matrix is then applied to the mandrel. In the case of thermoset based matrices, a cure cycle follows, while for thermoplastic matrices the polymer is softened (melted) before application to the mandrel where fusion bonding then occurs between layers of the wound material that forms the structure. Either the cure cycle with thermosets or cooling of the material as it is wound with thermoplastics produces a hollow structure or shell that is then removed from the mandrel to give the component.

To produce hollow structures or vessels, the technology of resin transfer moulding uses a mandrel and an outer mould, where a mixture of activated matrix resin is injected in the cavity between the mandrel and the outer mould where reinforcing fibres of typically glass, carbon or Kevlar have been placed. Impregnation of the reinforcing fibres then occurs, with cross-linking of thermoset polymers or polymerisation of thermoplastic monomer forming the matrix polymer and the finished shell-like or hollow component. The mandrel could then be removed.

The technology of bladder-assisted moulding, for the case of thermoplastic matrices, uses an outer mould and inner bladder to define the shape of the part. To melt the thermoplastic matrix and hence impregnate the reinforcing fibres, of typically glass, carbon or Kevlar, the thermoplastic is heated above its melting temperature and a pressure is then applied to the bladder to consolidate the material. The thermoplastic material must then be cooled, while under pressure, to form the hard shell-like or hollow composite component. Bladder materials comprising rubber-like materials, typically silicon rubber, are used to apply the compaction force, whereby the bladder stretches or elongates under the influence of the applied internal pressure. Alternate bladders consist of in-situ extrusion blow moulded polymeric materials. The thermoplastic matrix is typically heated by heating the outer mould, often metallic, above the matrix melting temperature before the pressure is applied for the required period, after which the mould is cooled sufficiently below the matrix melting temperature for solidification and crystallisation to occur. Alternately, additional or separate heating may be applied by passing hot oil through the bladder or by using embedded electric heaters in the bladder, to heat the composite from the inside, thus eliminating the need to cycle the mould temperature. Conductive reinforcing materials, such as carbon fibre based composites or composites containing a proportion of conductive fibres such as carbon or steel, may be heated in the mould through induction heating or electrical resistance heating. In-situ extrusion blow moulding has been previously claimed to provide heat to aid the melting of the thermoplastic matrix composite, but in practice additional temperature cycling of the mould above and below the matrix melting temperature is also needed.

The technology of bladder-assisted moulding, for the case of thermoset based matrices, uses an outer mould and inner bladder to define the shape of the part. A preimpregnated mixture of reinforcing fibres and activated matrix are placed over the bladder and the bladder with the surrounding preimpregnated material is placed into the outer mould. The mould temperature must be high enough to induce cure of the thermosetting matrix and after cure, cooled to allow part release. The bladder may also be heated, either through the passage of a hot fluid, or by embedded electrical heaters, to apply the heat necessary for cure of the impregnated material. The technology also consists of bladder-assisted resin transfer moulding where reinforcement substantially without matrix is placed over the bladder and the bladder coated with reinforcement is then placed into the mould. Activated resin is then applied that impregnates the reinforcing fibres with the application of internal pressure via the bladder, thereby aiding impregnation.

Such techniques for fabricating hollow structures or vessels, particularly if a rapid cycle time is required (which is the case for many applications of hollow composite structures or vessels as it reduces the cost of the component) have well known drawbacks which include:
- for thermoplastic filament winding based processes, the thermoplastic matrix based reinforcement must be heated prior to the application to a mandrel to ensure the thermal conditions necessary for fusion bonding. Hence high processing speeds, notably the application of the thermoplastic matrix based reinforcement to the mandrel, creates a limit on the speed of the process and hence the cycle time. High drag or friction forces induced by the placement of thermoplastic matrix based reinforcement create further quality problems whereby segregation of the thermoplastic matrix and reinforcing fibres may occur, creating an unfavourable microstructure. Additionally, the geometry of the component is limited where there is a need to remove the mandrel after processing. Where the mandrel remains in the component after processing, the mandrel must be compatible with the thermoplastic matrix based reinforcement and be able to sustain the high radial crush forces induced by hot fibre and matrix mixtures applied under high tension forces. The sequential application of composite layers to the mandrel is known to create high internal stresses in the component, affecting dimensional stability and the eventual durability of the component. The filament winding process also places restrictions on geometries that can be produced, where concave curvature requires in-situ bonding of the thermoplastic based composite material to the mandrel or preceding layer of composite;
- for thermoset based filament winding processes, the thermoset matrix must be cured onto the mandrel requiring a heating cycle either directly as the thermoset matrix based reinforcement is placed, or subsequent heating of the placed material and the mandrel. The process cycle time depends on the winding speed and hence this creates a limit on the speed of the process and thereby the cycle time. High drag or friction forces induced by the placement of thermoset matrix based reinforcement create further quality problems whereby segregation of the thermosetting matrix and reinforcing fibres may occur, creating an unfavourable microstructure. Additionally, the geometry of the component is limited where there is a need to remove the mandrel after processing. Where the mandrel remains in the component after processing, the mandrel must be compatible with the thermoset matrix based reinforcement and be able to sustaining the high radial crush forces induced by the fibre and matrix mixtures applied under high tension forces;
- for the resin transfer moulding based process, as used with thermoset based reinforced material, a preform must be assembled over the mandrel and resin injected between the mould and the mandrel. The cycle time is limited by the need to inject the resin into this space, where pressures are limited where a permanent hollow mandrel is used such that the pressure of the incoming fluid, here the activated resin, does not distort the geometry of the mandrel, hence limiting processes to lower rate and pressure injection rather than the shorter cycle time, high pressure process of structural reaction injection moulding. Furthermore, the cure reaction of the thermoset matrix either limits the cycle time or, where tailored to occur at a higher speed, induces high stresses in the composite. Unless complex and expensive preforms of reinforcement are prefabricated, parts of a constant wall thickness must be produced unless a local decrease in the reinforcing fibre fraction can be tolerated. Where the mandrel needs to be removed, expensive technologies, such as low melting temperature alloys, must be used where part geometries are not to be impaired.
- for the resin transfer moulding based process, for the case of thermoplastic based reinforced material, a preform must be assembled over the mandrel and activated monomer injected between the mould and the mandrel. The cycle time is limited by the need to inject the resin into this space, where pressures are limited where a permanent hollow mandrel is used such that the pressure of the incoming fluid, here the activated resin, does not distort the geometry of the mandrel, hence limiting processes to lower rate and pressure injection rather than the shorter cycle time, high pressure process of structural reaction injection moulding. Furthermore, the polymerisation reaction of the monomer either limits the cycle time or, where tailored to occur at a higher speed, places limitations on bladder materials. Thermal cycling above the monomer melting temperature for polymerisation to occur most rapidly and cooling after polymerisation to below the polymer melting temperature are also often required, requiring cycling of the mould temperature and/or mandrel temperatures for certain thermoplastic resin transfer moulding material systems. Unless complex and expensive preforms of reinforcement are prefabricated, parts of a constant wall thickness must be produced unless a local decrease in the reinforcing fibre fraction can be tolerated. Where the mandrel needs to be removed, expensive technologies, such as low melting temperature alloys, must be used where part geometries are not to be impaired.
- for the bladder assisted moulding process, for the case of thermoset based reinforced material, the need to cure the thermoset matrix material creates problems with chemical attack with rubber-like bladder materials, typically styrene with silicon rubbers, and hence bladder life is reduced. Bladder materials are generally removable due to the difficulty of achieving a bladder that is flexible enough to enable compaction of the impregnated reinforcing fibres prior and during cure while forming a reliable bond between the bladder and cured composite with the lack of high internal stresses in the finished component. Heating of the impregnated reinforcement is also required that is accomplished either through cycling of the mould temperature or heating the bladder material. Cycling the mould temperature is energy inefficient and time consuming, limiting the potential to reduce cycle times, and the fabrication of heated bladder systems is uneconomic for components made in large quantities while also being fragile and of limited life span. Additional internal inspection is also required in the case of removable bladders to ensure that small particles of the bladder material do not remain on the inside wall of the hollow composite or vessel and that the bladder integrity has been maintained such that it is safely usable for further moulding trials.
- for the bladder assisted moulding process, for the case of thermoplastic based reinforced material, the thermoplastic composite must be heated above the melt temperature of the matrix and cooled below the melt temperature before demoulding. This occurs either by heating the outer mould temperature above the matrix melting temperature and then cooling the mould below the matrix melting temperature, whereby the thermoplastic matrix composite is also heated above and below the thermoplastic composite matrix melting temperature during which time a compaction force is applied by the bladder, or by heating the bladder material such that the thermoplastic matrix is heated sufficiently above the melting temperature of the matrix for adequate impregnation to occur, followed by cooling of the composite structure sufficiently below the matrix melting temperature for stable component release from the mould. The currently available techniques outlined above have inherent limitations that reduce the potential of the process for applications where a minimum cycle time is required. Heating the (often metallic) outer mould is both time consuming and requires large amounts of energy. The use of embedded electrical heaters in a silicon rubber bladder creates a bladder system that is both fragile and difficult to extract from the cooled hollow composite structure or vessel, thereby limiting the geometry of applications. Furthermore, at the higher processing temperatures required for certain thermoplastics, for example PA12 and PET, the life span of the often costly silicon rubber bladders is limited. Previously disclosed inventions have claimed that in-situ extrusion blow moulding can form a bladder material that renders the thermoplastic composite matrix fluid, but where additional heating of the mould is required to ensure full melting. Where the outer layers of the thermoplastic composite are not heated sufficiently above the melting temperature of the thermoplastic matrix, inadequate impregnation occurs, and hence an unfavourable set of mechanical properties results and surface quality is diminished.

Thermosetting materials have additional disadvantages compared with thermoplastic based materials, notably for higher rate production, whereby a limited temperature capability results, unsatisfactory finished product aesthetics, lack of extended durability, lack of appropriateness for recycling and manufacturing related issues such as downtime due to clean-up and material handling costs and sub-ambient storage. Further, there are environmental concerns arising from worker exposure to vapour, overspray, emissions, etc., encountered during the fabrication process. Some engineered thermoset resins improve material performance through higher temperature capacity, but unacceptable material costs are associated with them.

Thermoplastic based materials have overcome many of the above problems but the processing techniques available are limited in cycle time due to complex heating and cooling cycles, either of the mould or of expensive and fragile bladder materials and bladders based assemblies with a heating ability. Additionally, high energy costs are associated with processes that require a cycling of the mould temperature above and below the matrix melting temperature or complex bladder based heating systems.

From WO 00 66347 A1 a process for making hollow composite structures or vessels is known comprising the steps of preforming of a hollow thermoplastic liner and covering such liner by over-wrapping with a thermoplastic composite material. Before being assembled the thermoplastic liner and the thermoplastic composite material are preheated separately in different ovens to different temperatures at which the two components become deformable. The document further discloses placing the heated over-wrapped liner into a heated mould and applying an internal pressure inside the heated over-wrapped liner while the moulding tool is closed to consolidate the composite material and liner against a geometry defined by the mould. The internal pressure inside the cooling over-wrapped liner is maintained until it is sufficiently rigid for being handled. Finally the formed hollow composite structure or vessel is removed from the mould.

US 5,868,878 discloses a method for heat treating a workpiece by forming a plasma of an ionizing gas around the workpiece.

### SUMMARY OF THE INVENTION

It is therefore the object of the present invention to provide an improved process for the fabrication of hollow composite parts and vessels.

This object is achieved by a process as outlined in claim 1. This non-isothermal process for fabricating hollow composite structures or vessels comprises the steps of:
A non-isothernal process for making hollow composite stuctures or vessels comprising the steps of:
   a) preforming of a hollow thermoplastic liner (1);
   b) over-wrapping the thermoplastic liner (1) with thermoplastic composite material (11);
   c) heating the over-wrapped liner in an oven above the melting temperature (Tm) of the thermoplastic composite material (11), thereby maintaining the over-wrapped liner to a desired geometry;
   d) placing the heated over-wrapped liner into a mould that is maintained below the melting temperature (Tm) of the thermoplastic composite material (11), thereby maintaining the over-wrapped liner to said desired geometry;
   e) applying an internal pressure (21) inside the heated over-wrapped liner (1) while the moulding tool (20) is closed to consolidate the composite material (11) and liner (1) against the geometry defined by the mould, thereby maintaining the over-wrapped liner to said desired geometry;
   f) maintaining the internal pressure (21) inside the cooling over-wrapped liner until the thermoplastic composite material (11) is sufficiently below the themoplastic composite melting termperature (Tm); and
   g) removing the formed hollow composite structure or vessel from the mould.

Such an improved process enjoys advantages including, as opposed to prior art processes of fabricating hollow composite parts and vessels: reduced cycle times due to the method of assembling the fibre, matrix and bladder prior to insertion into the mould, reduced cycle times due to the method of assembling the fibre, matrix and bladder in the mould, a reduction in the number of manufacturing steps, faster changeover times, faster start-ups, potential labour saving due to less material handling, floor space reduction, adaptability to automation, simplification of material storage and handling, a safer environment for employees, lower training costs, recyclable scrap materials, reduced cycle times from the thermal conditions required for moulding, reduced energy usage from the thermal conditions required for moulding, better distributions of fibers and matrix in the composite, the ability to mould in metallic or polymeric based inserts for connection of additional items to the vessel, the ability to have an integral liner of the same or different polymer to the matrix material of the composite, the ability to tailor barrier properties at the inside of the vessel, the ability to tailor the reinforcing fibre content through the wall thickness of the hollow or vessel component, etc.

The resulting hollow composite parts or vessels can be used for many applications, as typical diameters of these vessels could be 25 cm or larger. These applications include for example the use as containers for compressed air e.g. for brake systems of cars and trucks, breathing apparatus, water storage, hollow automotive or aerospace space frame structures, and generally everywhere where lightweight is of advantage.

According to another preferential mode of the invention, after step a) before the over-wrapping phase inserts are positioned on the liner, and before step c) the over-wrapped composite is consolidated onto the positioned inserts. Even more preferentially, it is possible to choose the inserts to have an operating temperature such that the critical dimensions are not distorted by the temperature of the heating phase during step c). Additionally, the over-wrapped composite can be locally consolidated onto the positioned inserts.

According to a further preferential mode of the invention, during step b) one or more liners are placed on the same over-wrapping line to form a continuous process and/or in step e) a rapid coupling device is used for rapid connection of the internal pressure.

Additional modes of realization are described in the dependent claims.

Material forms that may be considered for this invention combine either or both discontinuous and continuous reinforcing fibres with a thermoplastic matrix material with different reinforcing fibre architectures including both random and different degrees of reinforcing fibre alignment. Suitable arrangements of materials with a suitable mingling quality of reinforcement and matrix that may be used include tows or yams, tapes, braids, weaves, knits, fabrics and other textile processes suitable for manipulating or combining reinforcing fibre and matrix. Materials may be used in either or both an unconsolidated state, a partially consolidated state or a fully consolidated state where the material becomes flexible for the moulding process when the combination of matrix and reinforcing fibre material is heated using the principle of this invention to a forming temperature.

Suitable thermoplastic materials include: polypropylene, polyamide, in particular polyamide 12, polyethylene, cross-linked polyethylene, polybutylene terephthalate, polyethylene terephthalate and polyoxymethylene. Suitable reinforcing fibres include: glass, carbon, Kevlar, ultra high molecular weight polyethylene, ultra high molecular weight polypropylene and steel.

Techniques for combining reinforcing fibres and thermoplastic matrix materials, in both continuous and discontinuous fibre lengths, which are applicable for use with the above process include: melt impregnation, film stacking, solvent impregnation, commingling, powder impregnating using both aqueous slurries and electrostatic methods of coating, powder impregnated fibres with an unmelted sheath around the powder impregnated bundle for textile processing, standard fabrics impregnated by powder to form a semifinished product, the utilization of existing textile processing techniques applied to the warp knitting of split polymer films with weft insertion of reinforcement fibres, weft-inserted multi-axial warp knitting of reinforcing fibres and thermoplastic matrix ribbons, co-weaving yarns of the two fibres into a form possessing good drape characteristics, using a polymer fibre woven around a bundle of reinforcement fibres in the plied matrix technique, reinforcing and matrix yams inter-dispersed on line during fabric formation to produce drapable stitch bonded fabrics, heating of fibres impregnated with monomers that polymerize in-situ to form the composite, wire coating processes adapted to coating reinforcing fibres or bundles of fibres with matrix, pultrusion of fibres and matrix materials together and any other such process that achieves the required combination of fibre and matrix in a form between fully consolidated and unconsolidated forms.

Commingled materials, which are a preferred material for this moulding process, can be formed either directly as described in patents US 5011523 and US 5316561 where the reinforcing fibers are drawn from the molten state through a die where the reinforcing glass fibers are combined with a drawing head where the thermoplastic matrix is extruded and drawn mechanically onto the glass fibres or indirectly by separating fibre and matrix fibre yams (US 5241731) into open ribbons where the matrix fibres are electrically charged and then drawn into a flat open bundle via a ribboning bar to the commingling bar where the Carbon fibre yam is opened with an air curtain into an open flat ribbon that is then combined with the PEEK ribbon at the commingling bar or in the example shown herein of the material used to illustrate this invention where stretch broken Carbon fibres (80mm average length) are blended with polyamide 12 (PA12) staple fibres using a textile spinning technique (US 4825635) with the addition of a wrapping filament (US 5910361).

### BRIEF DESCRIPTION OF THE DRAWINGS

The invention, both as to organisation and method of operation, may be best understood by reference to the following description taken in conjunction with the claims and the accompanying drawings of which:
- FIG. 1: Pictorial view of a liner/mandrel employed in practising a first inventive embodiment;
- FIG. 2: Cross-sectional view taken along the lines A-A of Figure 1 with optional inserts;
- FIG. 3: Enlarged cross-sectional view of Figure 2 showing an optional incorporated insert;
- FIG. 4: A pictorial view of the liner or mandrel being over-wrapped with a mixture of thermoplastic resin and reinforcing material;
- FIG. 5: A pictorial view of a continuous process where the liner or mandrel are being over-wrapped with a mixture of thermoplastic resin and reinforcing material;
- FIG. 6: A pictorial view of a device for consolidating the over-wrapped composite onto inserts for attaching exterior features;
- FIG. 7: A pictorial view of a device for separating the over-wrapped inserts with composite consolidated in place over the inserts;
- FIG. 8: A cross-sectional view of the liner over-wrapped with composite with an insert in place including an enlarged fragmentary cross-sectional view;
- FIG. 9: Pictorial view of the liner after being over-laid with the layer(s) of composite;
- FIG. 10: A cross-sectional sequential view of the conventional isothermal processing sequence used to produce hollow composite structures or vessels;
- FIG. 11: A cross-sectional sequential view of the non-isothermal processing sequence employed in practising a first inventive embodiment;
- FIG. 12: A cross-sectional view of the over-wrapped and preheated liner located in the mould just prior to closure of the mould;
- FIG. 13: A cross-sectional view of the over-wrapped and preheated liner located in the mould during internal pressurization such that the over-wrapped liner is formed into the shape defined by the inner surface of the mould;
- FIG. 14: A cross-sectional sequential view illustrating temperature gradients, including four non-exclusive possibilities, through the thickness of the liner and over-wrapped composite for retaining integrity of the bladder and maximising surface consolidation of the over-wrapped composite, including an enlarged cross-sectional view and corresponding temperature (T) distance (d) graph.
- FIG. 15: A cross-sectional sequential view of a high speed connection device to attach a pressurization source;
- FIG. 16: Temperature and pressure histories of a typical moulding cycle;
- FIG. 17: A cross-sectional view of the completed hollow composite structure or pressure vessel prepared by practising the first and second inventive embodiments.

### DETAILED DESCRIPTION OF THE PREFERRED EMBODIMENTS

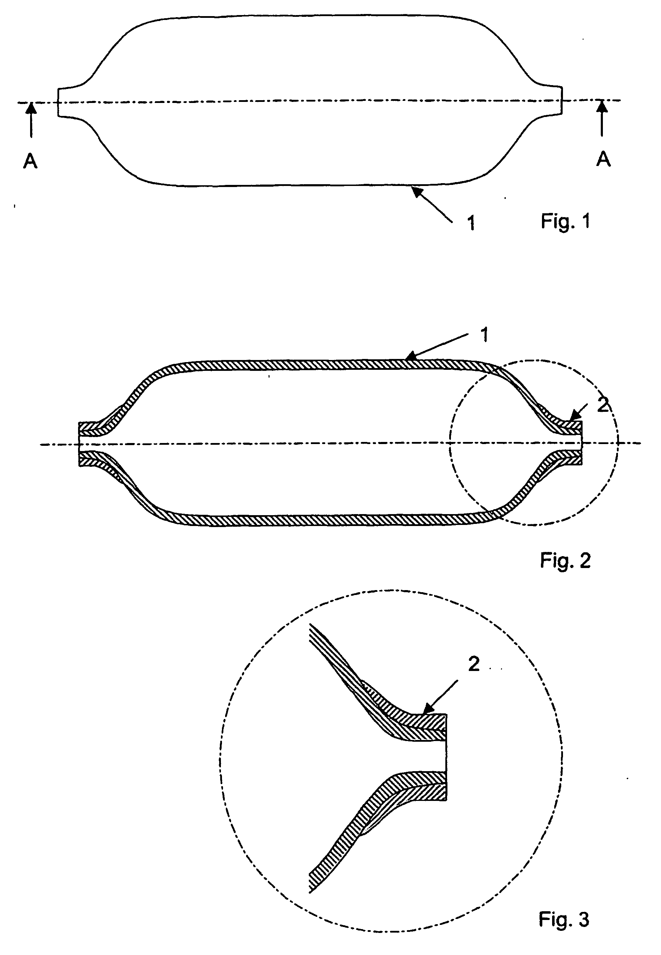

The first embodiment uses a hollow thermoplastic liner or bladder, produced by processes such as extrusion blow moulding or cast rotational moulding, such as shown in Fig.1. In the example shown the liner 1 or bladder is generally an elongated structure of geometry such as can be produced via extrusion blow moulding, terminating with either one or more openings, located either on the central axis of the component or at any other suitable location. Hence bladder geometries are not restricted to shapes of revolution, but are applicable to any hollow thermoplastic shape that can be made by processes such as extrusion blow moulding or cast rotational moulding, processes which are well known in the art. In addition to using a thermoplastic liner 1 or bladder, short fibre reinforced or discontinuous fibre reinforced thermoplastic materials may also be used such that the melt viscosity or melt strength of the polymer and fibre mixture is increased both during the extrusion blow moulding process and during the preheat, transfer and moulding stages for the non-isothermal bladder inflation moulding process. The addition of short glass fibre also increases the mechanical properties of the liner or bladder such that it becomes part of the load bearing material in a hollow composite structure or vessel.

Over the hollow liner or bladder, metallic, ceramic or polymeric inserts 2 can optionally be added before the over-wrapping or over-braiding of thermoplastic matrix reinforced material. The inner insert 2 must have an operating temperature such that the critical dimensions, for example thread geometries, are not distorted by heat during the final non-isothermal moulding process. Such inserts can be made via a variety of processes well known in the art including injection moulding, compression moulding, casting and machining. Alternatively, inserts may be placed into the extrusion blow moulding tool and be directly over moulded during the process of forming the bladder, relying either on mechanical interlocking with non-compatible insert materials and/or fusion bonding with compatible insert materials. Inserts 2 located on the liner or bladder are shown in Figs 2 and 3.

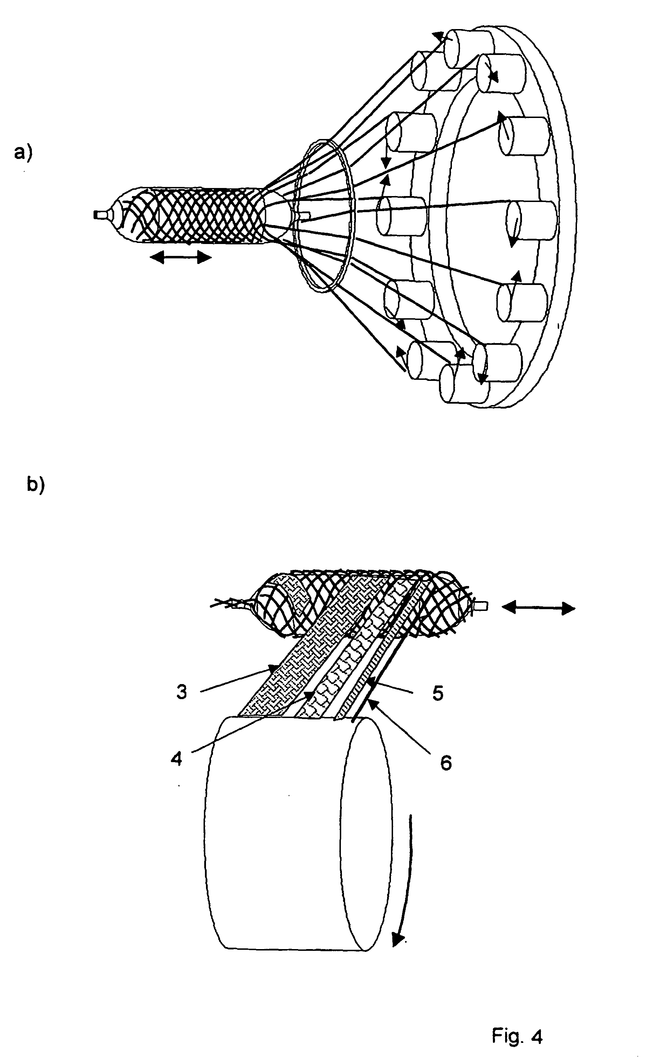

The bladder 1 with positioned inserts 2, held either via a locating device on the liner or bladder or by an external locating fixture, is used as a mandrel for an over-wrapping or over-braiding procedure whereby reinforcing fibres, such as the ones mentioned above, intimately mixed with a thermoplastic resin are placed over the liner or bladder, as shown in Fig. 4. Suitable processes for over-wrapping or over-braiding are textile based processes where yarns or tows 3-6 of reinforced thermoplastic matrix based material are wound around the liner or mandrel to provide an even coverage of material over the liner or bladder surface, including processes such as: braiding, either cold or with the addition of heating, tailored braiding where the fibre orientation is controlled across the geometry of the liner or bladder, 3-D braiding processes where interlocking occurs between layers of the applied reinforced thermoplastic matrix based material, over-wrapping of woven tapes or fabrics of reinforced thermoplastic matrix based materials such that a greater area of coverage occurs decreasing the cycle time and optimising system economics and filament winding, either cold or with the addition of heating. Pressure is not directly applied during the over-wrapping or over-braiding process, thereby increasing winding speeds and decreasing cycle times.

In addition to the over-wrapping or over-braiding of mixtures of thermoplastic matrix and reinforcing fibres, a final layer of material can be added, depending on the application, consisting of either a higher matrix fraction in the thermoplastic and reinforcing fibre mixture or solely of thermoplastic matrix fibres or wrapping films, including extrudates, to provide a thermoplastic matrix rich surface to both improve surface quality, sealing the reinforcing fibres in the component, to give a surface that is more readily painted or coated with additional materials or processes after moulding and to ensure full surface consolidation. This higher matrix fraction can be achieved with either the same matrix polymer as the matrix for the reinforced material or with a compatible but different polymer to optimise barrier and surface performance properties.

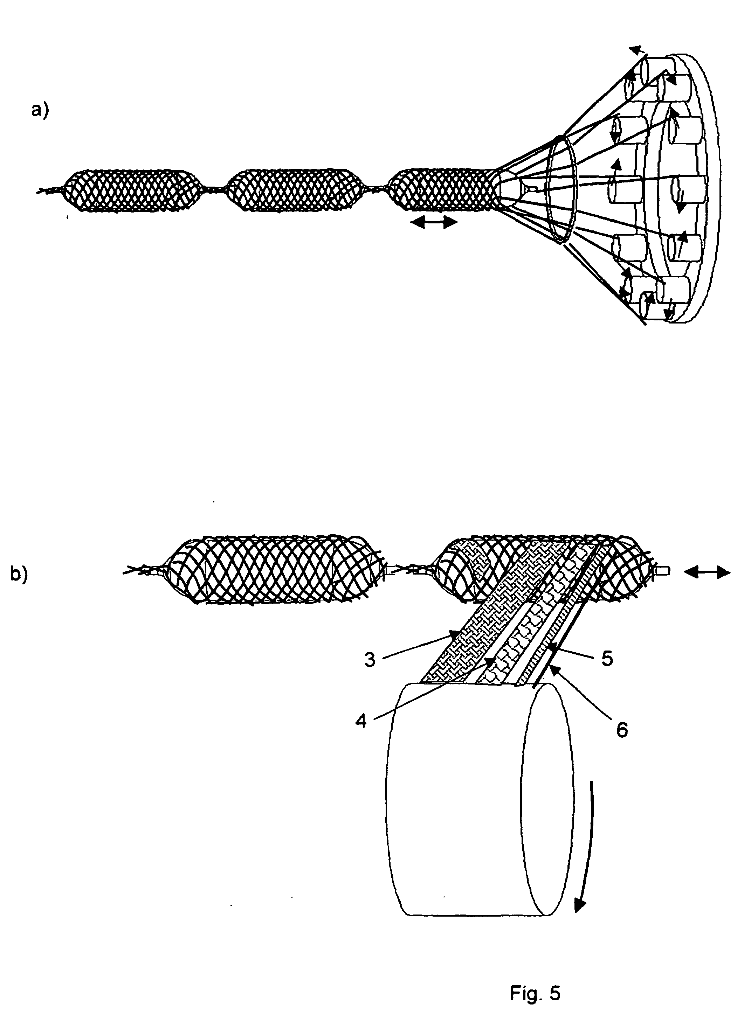

One or more liners or bladders, with inserts attached, may optionally be placed on the same over-wrapping or braiding line such as to form a continuous over-braiding or over-wrapping process, as shown in Fig. 5.

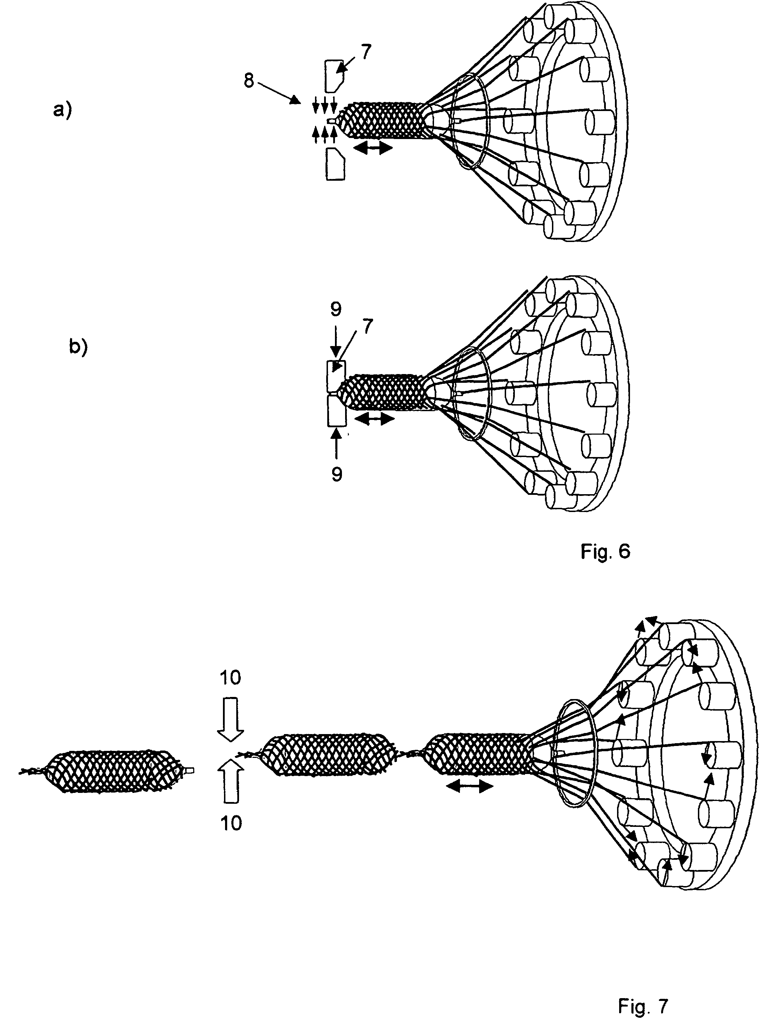

To locate the inserts onto the liner or bladder, where the inserts are not directly incorporated, and to ensure that good contact and final consolidation occurs between the insert, liner or bladder and the reinforced thermoplastic matrix based material, where either over-moulded or located inserts are used, the over wrapped or over braided material is optionally consolidated onto the insert, as shown in Fig. 6. A hot clamping device 7 is used that rapidly heats the reinforced thermoplastic matrix based material above the matrix melt temperature and applies a force 9 to impregnate the reinforcing fibres with the thermoplastic matrix, followed by cooling of the clamping device 7 while clamping pressure 9 is maintained such that consolidation pressure is applied while the reinforced thermoplastic matrix based material cools. Alternatively, a heating source 8 is used to rapidly heat the reinforced thermoplastic matrix based material above the matrix melt temperature followed by a clamping device 7, maintained at a temperature below the melting point of the polymer, that applies consolidation pressure while the reinforced thermoplastic matrix based material cools.

Either built into or separate from the heating and cooling device that consolidates the over wrapped or over braided material onto the insert, a cutting device 10 separates the preform assembly of liner or bladder 1, reinforced thermoplastic matrix based material, and inserts 2 from the adjacent preform assembly, where reinforced thermoplastic matrix based material crosses over between liners or bladders where a continuous process is used, as shown in Fig. 7. Cutting can either occur on consolidated and rigid reinforced thermoplastic matrix based material or on the placed reinforced thermoplastic matrix based material that has not been fully consolidated.

As a further step to reduce cycle times during the eventual non-isothermal bladder inflation moulding process, heat may be applied during any of the over-wrapping or over-braiding processes such that the matrix in the reinforced thermoplastic matrix based material is heated above the melting temperature of the matrix enabling spontaneous wetting of the reinforcement via capillary action and partial impregnation via the tension forces induced in the over-wrapping or over-braiding material as it is placed over the liner or bladder. As such a partially impregnated material results with a lower bulk than material which has not been partially impregnated, resulting in a material that has less trapped gas during the heating and consolidation phases of the non-isothermal bladder inflation moulding process.

Alternatively, the assembled preform of liner or bladder, over-wrapped or over braided reinforced thermoplastic matrix based material and inserts may be flash heated using a high flux infra red heating or similar heating source to melt the over-wrapped or over-braided reinforced thermoplastic matrix based material without affecting the integrity of the liner or bladder, thereby providing a preform with increased stability for any transport to a different location where necessary before the final moulding operation.

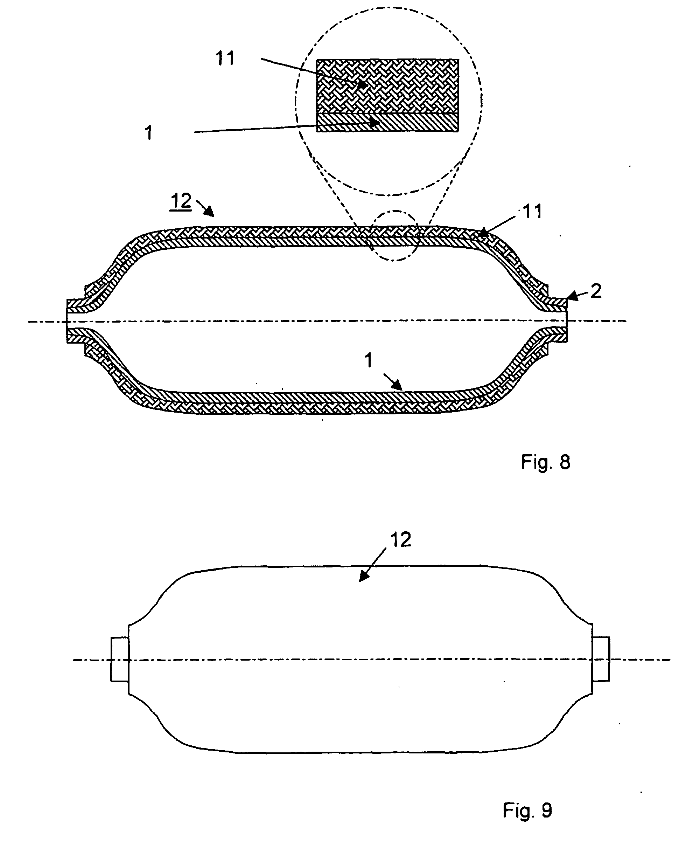

A liner 1 or bladder 12 over-wrapped with composite material 11 is thereby obtained, with the optional location of inserts 2 for attaching external features to the hollow composite part or vessel, as shown in Figs. 8 and 9.

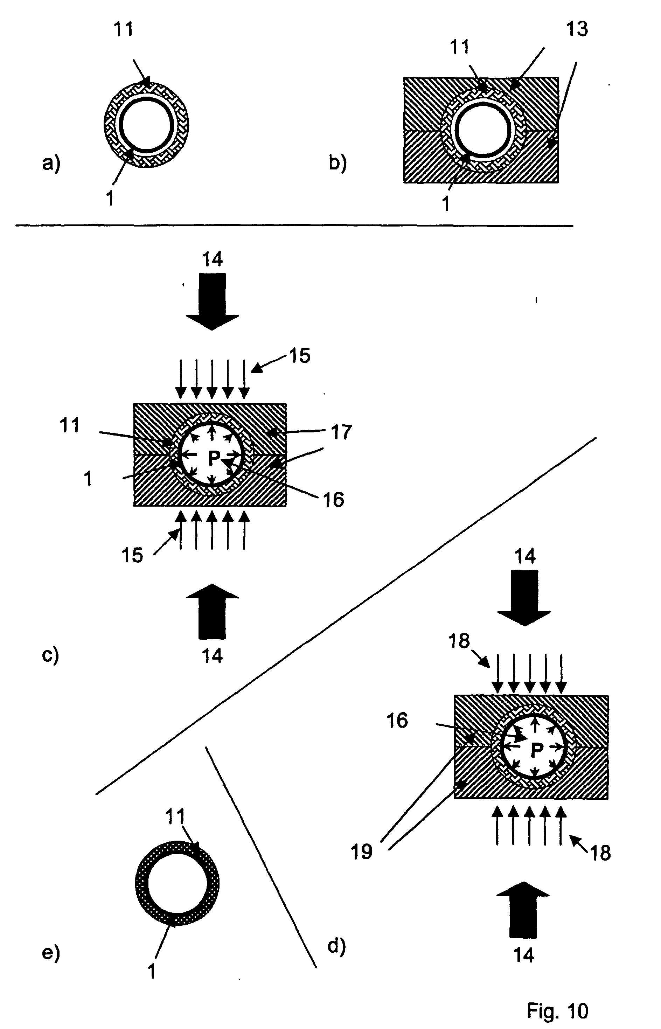

Processes according to the state of the art have completed the final consolidation of thermoplastic composite materials using either rubber-like bladders or with in-situ extruded thermoplastic bladder material. Such materials are heated to bring the thermoplastic composite matrix above its melting temperature, either through latent heat of a directly produced extrudate, cycling of the mould temperature above and below the matrix melting temperature, or via heating of the bladder internally via hot fluid circulation or embedded electrical elements. Such processes either produce components of limited quality, in the case of heating via the latent heated of extruded polymeric material, restrict geometries and have limited bladder life for embedded heaters in rubber-like bladders, or require complex internal heating circuits. Where the mould temperature is cycled, an isothermal process results, such as shown in FIG. 10. The liner 1 and over-wrapped composite 11 (Fig. 10a) are placed into a mould 13 below the melting temperature of the liner 1 or bladder and/or over-wrapped composite 11 (Fig. 10b). The mould is then held closed while rapid heating 15 is applied to heat the mould above the melting temperature of the liner 1 or bladder and/or over-wrapped composite 11 (Fig. 10c). After the required impregnation time, the rapid heating source 15 is replaced by a rapid cooling source 18, while the mould remains closed 14, to reduce the temperature below the melting temperature of the liner 1 or bladder and/or over-wrapped composite 11 (Fig. 10d). After the required consolidation and cooling time, the mould 13 is opened and the part obtained (Fig. 10e).

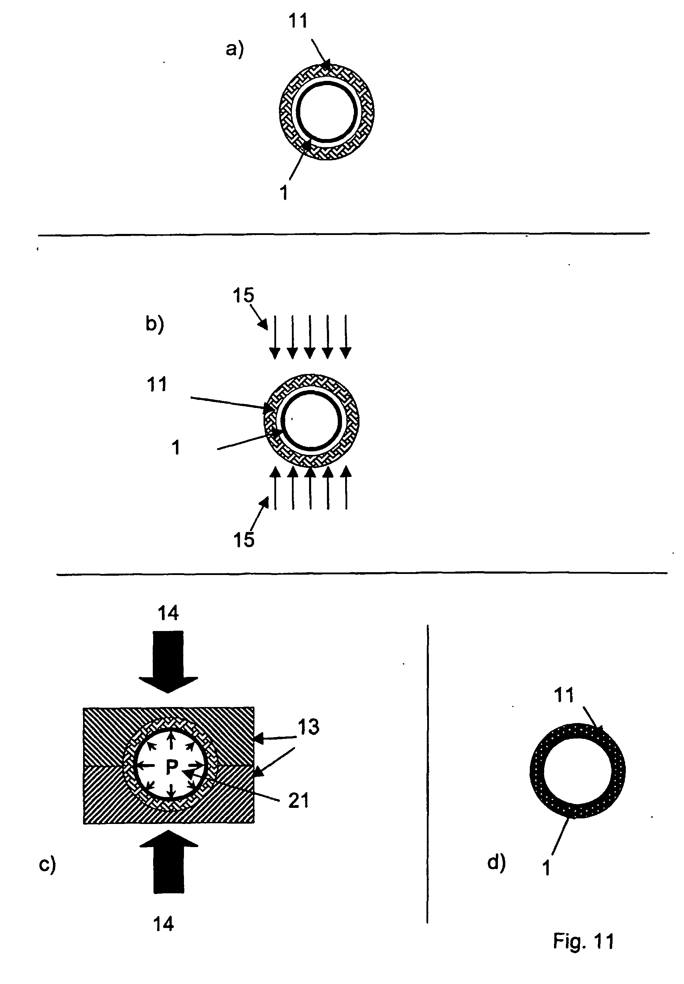

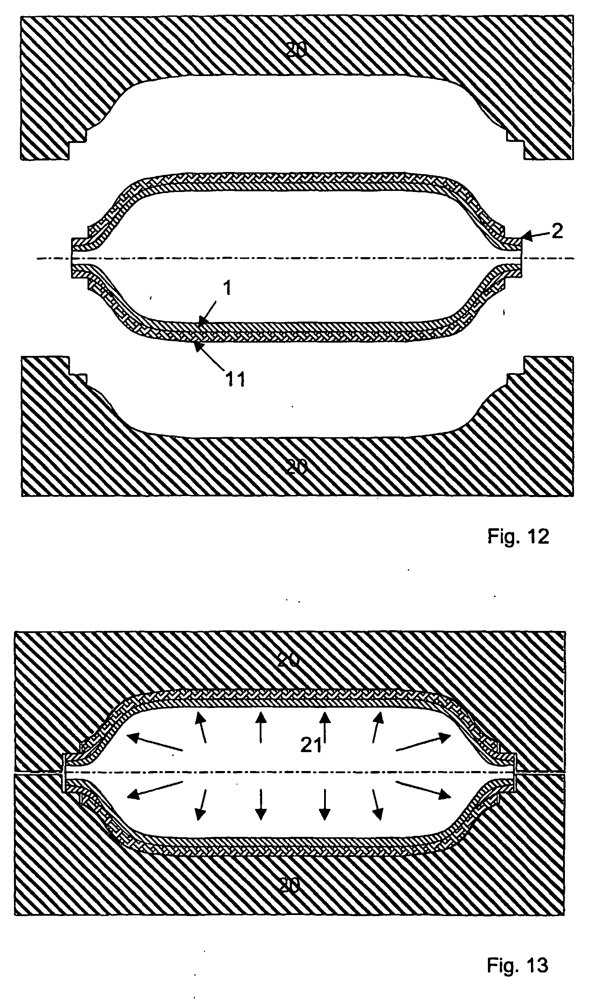

The proposed process is a non-isothermal bladder inflation process that does not require cycling of the mould temperature or heating of the bladder internally whilst in the closed mould. To melt the thermoplastic matrix and hence reduce the viscosity, enabling impregnation of the reinforcing fibres, the assembly of a thermoplastic liner 1 or bladder and over-wrapped or over-braided mixtures of thermoplastic matrix and reinforcing fibres 11 (Fig 11a) are heated in an oven 15 outside of the closed final moulding tool 13 (Fig. 11b). After the heating cycle, the over-wrapped liner is located in the moulding tool 13 (Fig. 11c), Fig. 12), where the moulding tool 13 is closed and an internal pressure 21 applied inside the liner 1 or bladder, so as to force the over-wrapped liner or bladder to conform to the shape of the mould geometry (Fig. 13). The moulding tool 13 is maintained below the melting temperature of the liner or bladder and/or over-wrapped composite 11, while the internal pressure 21 is maintained for the time required to consolidate and cool the hollow composite part or vessel. The mould is then opened and the part removed (Fig. 11d).

During the heating cycle, the oven parameters are adjusted such that the outer over-wrapped or over-braided mixtures of thermoplastic matrix and reinforcing fibres are heated sufficiently above the matrix melting temperature for good consolidation to occur and a good surface finish to result from the final moulding process, while not reaching excessive temperatures where degradation of the matrix occurs. For an example of a polyamide 12 matrix in the reinforcing material, an upper temperature is chosen such that degradation of the polymer does not initiate to an extent such that the short term or long term mechanical properties are not adversely affected, odour problems do not occur beyond acceptable limits and surface quality is not unduly influenced, which is typically around 280 °C.

Also during the heating process, the oven parameters are adjusted such that the inner liner or bladder temperature is optimised to be extendable under the applied internal pressure 21 during the final moulding cycle, thereby enabling the internal pressure 21 in the liner 1 or bladder to be transferred to the hot over-wrapped or over-braided mixtures of thermoplastic matrix and reinforcing fibres giving the driving force for concurrent consolidation and cooling in the moulding tool 20. Additionally, the bladder temperature is restricted such that the viscosity of the bladder matrix does not become too low such that the liner or bladder looses integrity, excessive diffusion of the pressurizing fluid is permitted and the liner or bladder is thereby unable to resist the application of an internal pressure during the final moulding cycle. A suitable temperature, for an example of the present embodiments using polyamide 12, consists of heating the bladder temperature to 220°C. Preferred materials for liners or bladders are high molecular weight grades of the same polymer as used in the matrix of the over-wrapped or over-braided mixtures of thermoplastic and reinforcing fibres, where a higher molecular weight results in higher melt viscosities, thereby maintaining the integrity of the liner or bladder material to a higher temperature. Other preferred materials are thermoplastic polymers that have been partially cross-linked to give rubbery behaviour above the melt temperature with a delayed loss of integrity, such as cross-linked polyethylene. A temperature gradient therefore results during the heating cycle of the assembled liner or bladder with over-wrapped or over-braided mixtures of thermoplastic matrix and reinforcing fibres, such that the outer layers of over-wrapped or over-braided mixtures of thermoplastic matrix and reinforcing fibres are heated to around 280 °C, for the example of a polyamide 12 matrix, and the inner liner or bladder material is heated to only around 220 °C.

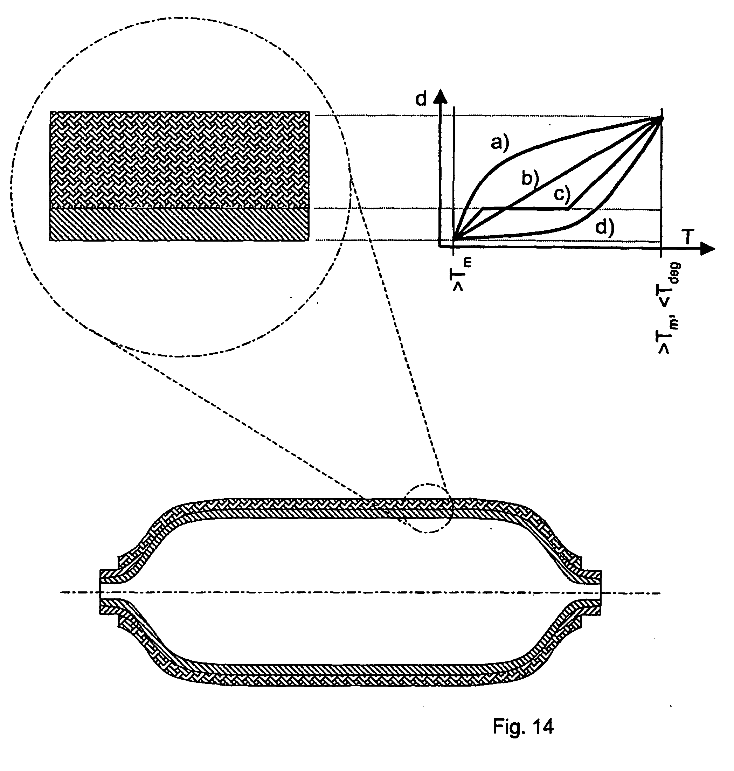

Such temperature profiles, as described above for the over-wrapped composite and liner or bladder materials, are illustrated in Fig. 14, where four different non-exclusive heating profiles are shown.

Suitable oven systems include: hot gas ovens, forced convection hot gas ovens, infra-red ovens, and combinations of infra-red and hot gas or forced hot gas ovens, using either electrical or gas powered heating elements or emitters. A preferred oven combination for this heating cycle is a combined forced hot gas and infra red oven, where the preset and controlled temperature of the forced hot gas penetrates to the inner liner or bladder and heats the liner or bladder to the required temperature, followed by infra red heating that quickly heats the outer layers of over-wrapped or over-braided mixtures of thermoplastic matrix and reinforcing fibres while not penetrating to the inner liner or bladder, whereby the flux level from the infra red emitters are tailored to give the desired temperature gradient through the material.

During the heating process, the assembled liner or bladder and over-wrapped or over-braided mixtures of thermoplastic matrix and reinforcing fibres are maintained to the desired geometry using a frame that clamps the assembled preform. This clamp system is then transferred after the heating cycle to the moulding tool 20, where the frame fits integrally with the moulding tool to locate the preheated assembly rapidly in the correct location inside the moulding tool. A fast transfer from the oven to the moulding tool 20 is preferable to avoid cooling of the preheated assembly of liner 1 or bladder and over-wrapped or over-braided mixtures of thermoplastic matrix and reinforcing fibres. Typically the internal pressure 21 must be applied to the liner 1 or bladder and the mould 20 held closed within 20 seconds of the finish of the preheat cycle, and faster times improve part quality notably, both in terms of reducing void contents, hence increasing mechanical properties, and improving the surface quality or degree of surface impregnation. Additionally, a low internal pressure of up to 2bar can be applied to the inside of the liner or mandrel during the heating cycle, to help maintain the shape of the bladder or liner against gravitational forces.

Where the preferred method of assembling preforms with previously incorporated inserts and locally preconsolidated, at the insert region, over-wrapped or over-braided mixtures of thermoplastic matrix and reinforcing fibres is used, the following mechanism is a preferred method of holding the over-wrapped or over braiding liner 1 or mandrel during the heating, transfer and moulding processes: a carrier frame, which is designed to interface with the mould, consists of side members to rigidly connect the end devices, which are used to hold the inserts and connect the internal pressure system. Spring loaded split blocks are clamped over the inserts 2 such that they maintain the shape of the over-wrapped or over-braided liner 1 or bladder during the heating process, and these blocks are transferred with the heated material into the mould.

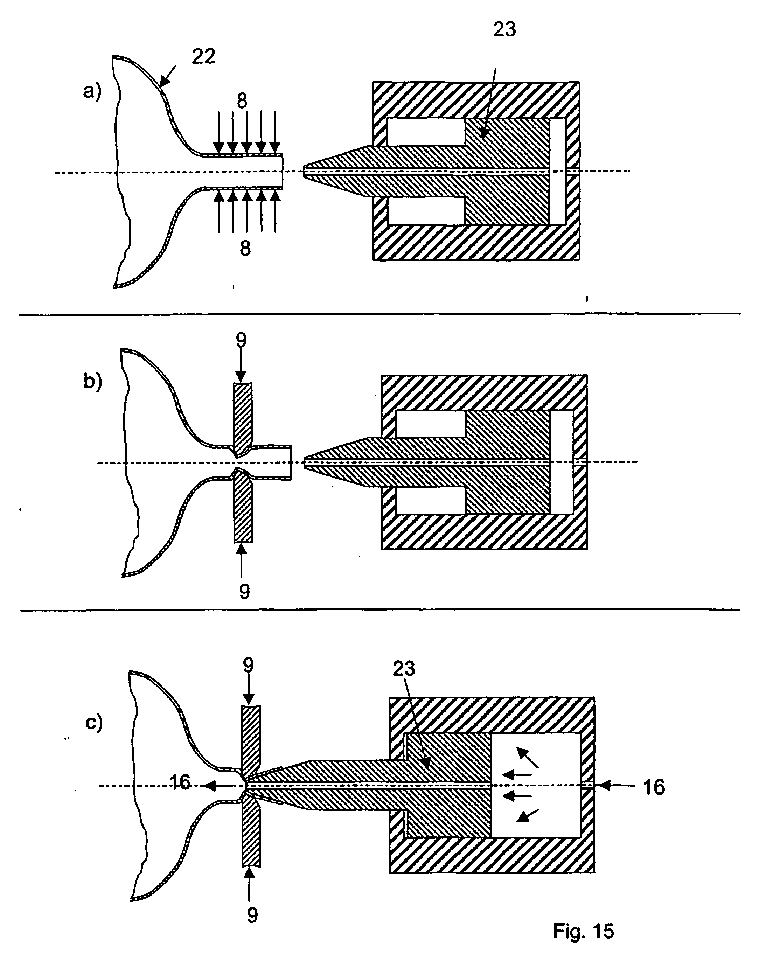

Also as part of the end device assembly, a cone 23 with an axial hole is used such that when pushed into the liner, a seal is created against the polymeric material, as shown in Fig. 15. The cone and deformed bladder interface with a block containing a profiled radius on an internal axial hole such that the hole restrains the movement of the cone thereby ensuring that a seal is made. The cone is pushed into the deformable liner or bladder (Fig. 15c) as the internal pressure system is connected in the moulding tool by an integral pneumatic cylinder, actuated by initiation of the internal pressure, coinciding with closure of the mould, such that cooling of the assembled liner or bladder with over-wrapped or over-braided mixtures of thermoplastic matrix and reinforcing fibres is minimised before the internal pressure 21 is applied. After the moulding cycle is completed, the pneumatic cylinder is reversed and the cone 23 removed to enable release of the part. The polymeric liner or bladder material that protrudes from the finished component, typically 25mm by 15mm diameter, is then trimmed and can be recycled in the production of liners where required.

The preheated assembly of liner or bladder with over-wrapped or over-braided mixtures of thermoplastic matrix and reinforcing fibres is transported to a mould that is generally composed of two main pieces, with movable cores where appropriate to create detail and concave features, where the assembly is held between the two principle mould halves such that contact of both mould halves occurs substantially simultaneously, thereby ensuring substantially balanced heat transfer and cooling from the hot liner or bladder and over-wrapped or over-braided mixtures of thermoplastic matrix and reinforcing fibres with the mould, which is maintained sufficiently below the matrix melting temperature to ensure a fast cooling rate and a reduced cycle time, but sufficiently above the glass transition temperature to achieve the desired surface impregnation, consolidation and hence surface quality (Fig. 12).

Internal pressure 21 is then applied to the liner 1 or bladder such that the liner 1 or bladder deforms against the over-braided mixtures of thermoplastic matrix and reinforcing fibres, impregnating and consolidating the over-braided mixtures of thermoplastic matrix and reinforcing fibres against the geometry of the mould wall where concurrent cooling of the assembled liner 1 or bladder and over-braided mixtures of thermoplastic matrix and reinforcing fibres occurs against the mould 20, as shown in Fig 13, where the temperature of the mould is maintained using a heating circuit and also a cooling circuit, where needed, as commonly used with other thermoplastic composite non-isothermal moulding processes.

The internal pressure 21 in the liner 1 or bladder is maintained while the mould 20 is closed via a hydraulic or mechanical clamping device. Typical internal pressures using an over-wrapping or over-braiding of carbon fiber reinforced polyamide 12 are 10bar, with the pressure depending on the degree of intimacy achieved between the reinforcing fibre and matrix polymer. Such low moulding pressures reduce the size and expense of both the hydraulic or mechanical mould clamping equipment and the mould itself. The internal pressure is maintained for a time period that ensures a good consolidation of the over-wrapped or over-braided mixtures of thermoplastic matrix and reinforcing fibres, typically between 30 seconds and 180 seconds depending on the final void content required for the application and the wall thickness of the component.

The internal pressure 21 is then released and the mould 20 opened to give the hollow composite part or vessel.

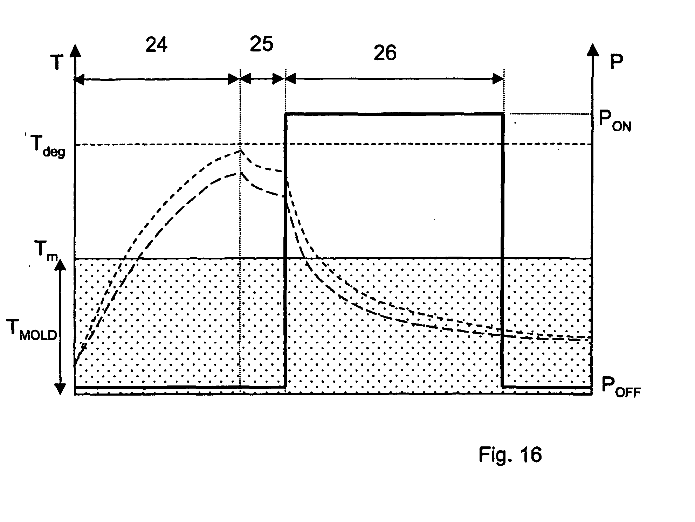

Fig. 16 summarises the principles of the temperature and pressure histories of the disclosed invention, which define the process as non-isothermal. The solid line indicates the pressure inside the liner, the dashed lines indicate the outer composite temperature (short dashes) and the liner temperature (long dashes).

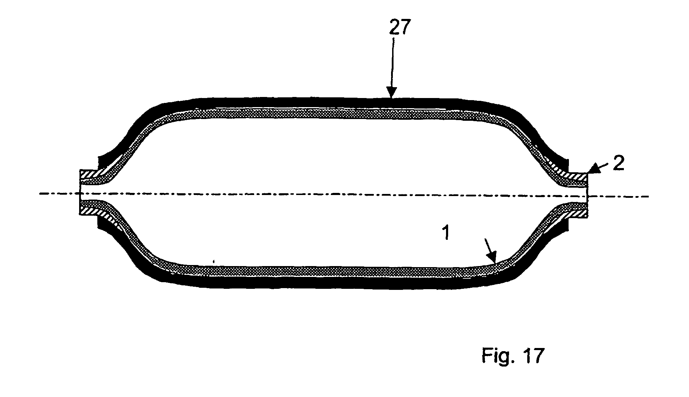

Where the preferred method of assembling and preparing the liner 1 or mandrel with over-wrapped or over-braided mixtures of thermoplastic matrix and reinforcing fibres with integral inserts 2 has been used, a net shape finished component results (Fig. 17) with only minor finishing operations such as removing polymeric flash from the tool interface area, thereby avoiding the high additional cost of machining or trimming operations. In addition, the fibre reinforcement is sealed in the polymeric matrix and the lack of additional machining or trimming processes ensures good environmental resistance.

The hollow composite parts or vessels can be used for many applications, as typical diameters of these vessels could be 25cm or larger. These applications include for example the use as containers for compressed air e.g. for brake systems of cars and trucks, breathing apparatus, water storage, hollow automotive or aerospace space frame structures, and generally everywhere where lightweight is of advantage.

### List of signs and reference numerals:

- 1: liner
- 2: insert
- 3: fabrics
- 4: knits
- 5: tape
- 6: yams/tows
- 7: forming clamps
- 8: heat
- 9: pressure
- 10: separating device
- 11: over-wrapped composite
- 12: liner over-wrapped with composite material with integral inserts
- 13: cool mould
- 14: clamping force
- 15: rapid heat source
- 16: pressurizing fluid
- 17: hot mould
- 18: rapid cooling source
- 19: cool mould
- 20: moulding tool
- 21: internal pressure
- 22: liner, over-wrapped composite not shown
- 23: conical or profiled plunger activated by 16
- 24: pre-heat phase of composite over-wrapped liner
- 25: transfer to mould
- 26: application of internal pressure to liner, impregnation, formation to mould geometry, consolidation, cooling
- 27: consolidated composite
- T_{MOLD}: mould temperature, less than melting temperature of thermoplastic liner and thermoplastic composite matrix
- Tₘ: melting temperature of thermoplastic liner and/or thermoplastic composite matrix
- T_{deg}: degradation onset temperature

## Claims

1. A non-isothermal process for making hollow composite stuctures or vessels comprising the steps of:
a) preforming of a hollow thermoplastic liner (1);
b) over-wrapping the thermoplastic liner (1) with thermoplastic composite material (11);
c) heating the over-wrapped liner in an oven above the melting temperature (Tm) of the thermoplastic composite material (11), thereby maintaining the over-wrapped liner to a desired geometry;
d) placing the heated over-wrapped liner into a mould that is maintained below the melting temperature (Tm) of the thermoplastic composite material (11), thereby maintaining the over-wrapped liner to said desired geometry;
e) applying an internal pressure (21) inside the heated over-wrapped liner (1) while the moulding tool (20) is closed to consolidate the composite material (11) and liner (1) against the geometry defined by the mould, thereby maintaining the over-wrapped liner to said desired geometry;
f) maintaining the internal pressure (21) inside the cooling over-wrapped liner until the thermoplastic composite material (11) is sufficiently below the thermoplastic composite melting temperature (Tm); and
g) removing the formed hollow composite structure or vessel from the mould.

2. A process according to claim 1, in which after step a) before the over-wrapping phase inserts (2) are positioned on the liner (1), and in which before step c) the over-wrapped composite is consolidated onto the positioned inserts (2).

3. A process according to claim 2, in which the inserts (2) have an operating temperature such that the critical dimensions are not distorted by the temperature of the heating phase during step c).

4. A process according to one of the claims 2 or 3, in which the over-wrapped composite is locally consolidated onto the positioned inserts (2).

5. A process according to one of the preceding claims, in which during step b) one or more liners (1) are placed on the same over-wrapping line to form a continuous process.

6. A process according to one of the preceding claims, in which in step e) a rapid coupling device is used for rapid connection of the internal pressure (21).

7. A process according to claim 6, in which a rapid gas connection system with an integral pneumatic cylinder is used to apply the internal pressure (21), where a conical member (23) with an axial hole is pushed into the liner (1) against a block with a profiled internal radius on an axial hole, where a seal is created against the liner material.

8. A process according to one of the preceding claims, in which the thermoplastic liner (1) and/or the thermoplastic composite matrix material (11) is selected from among the group comprising polypropylene, polyamide, particularly polyamide 12, polyethylene, cross-linked polyethylene, polybutylene terephthalate, polyethylene terephthalate, polyoxymethylene, polyphenylene sulfide and polyethere-therketone.

9. A process according to one of the preceding claims, in which during step a) the thermoplastic liner (1) is produced by extrusion blow moulding or rotary casting.

10. A process according to one of the preceding claims, in which during step a) high molecular weight polymers are used to increase the melt strength of the thermoplastic liner (1).

11. A process according to one of the preceding claims, in which during step a) discontinuous reinforcing fibres are used to increase the melt strength of the thermoplastic liner (1).

12. A process according to one of the preceding claims, in which during step a) discontinuous reinforcing fibres are used as part of the load bearing function of the hollow composite structure or vessel.

13. A process according to one of the preceding claims, in which during step b) composite material is wrapped around the liner (1) by processes including filament winding, braiding, tailored braiding, 3-D braiding, over-wrapping of fabrics or wide tapes.

14. A process according to one of the preceding claims, in which during step b) a final layer of material can be added to tailor surface properties.

15. A process according to one of the preceding claims, in which before step c) the over-wrapped composite is optionally heated above the composite melting temperature (Tₘ) such that spontaneous wetting of the reinforcement by capillary action such that partial impregnation occurs and the bulk of the composite material is reduced.

16. A process according to one of the preceding claims, in which during step c) a temperature gradient is induced during the heating phase such that the outer layers of the over-wrapped composite materials (11) are sufficiently above the matrix melting temperature (Tₘ) to maximise impregnation whilst avoiding degradation while the thermoplastic liner (1) is maintained at a temperature above the melting point of the thermoplastic liner such that the material is deformable but retains sufficient melt strengh for handling during the following steps.

17. A process according to one of the preceding claims, in which during step c) an oven system for such heating cycles consists of a combined forced hot gas and infra red oven enabling fine tuning of the though thickness temperatue profile.

18. A process according to one of the preceding claims, in which during step c) a low internal pressure (21) can be maintained inside the liner during the heating cycle to help maintain the shape of the liner (1).

19. A process according to one of the preceding claims, in which before step c) the over-wrapped liner is maintained to the desired geometry using a frame that clamps the over-wrapped liner, which enables transfer of the heated assembly into the moulding tool (20).

20. A process according to one of the preceding claims, in which before step e) the heated over-wrapped liner is located between the two mould halves such that contact of both mould halves occurs substantially simultaneously.

21. A process according to one of the preceding claims, in which before step b) the over-wrapped composite is optionally heated above the composite melting temperature (Tₘ) such that spontaneous wetting of the reinforcement by capillary action such that partial impregnation occurs and the bulk of the composite material is reduced.

22. A process according to one of the preceding claims, in which a hollow composite structure or vessel is produced with integral inserts permitting connection of external features.

23. A process according to one of the preceding claims, in which a hollow composite structure or vessel is produced with integral thermoplastic liner.

## Patentansprüche

1. Nichtisothermes Verfahren für das Herstellen hohler Verbundstrukturen oder Gefäße umfassend die Schritte des:
a) Vorformens einer hohlen thermoplastischen Auskleidung (1);
b) Einhüllen der thermoplastischen Auskleidung (1) mit einem thermoplastischen Verbundmaterial (11);
c) Erhitzen der eingehüllten Auskleidung in einem Ofen über die Schmelztemperatur (Tm) des thermoplastischen Verbundmaterials (11), unter Beibehalten der eingehüllt Auskleidung bei einer erwünschten Geometrie;
d) Positionieren der erhitzen eingehüllten Auskleidung in eine Form, die unterhalb der Schmelztemperatur (Tm) des thermoplastischen Verbundmaterials (11) gehalten wird, unter Beibehalten der eingehüllten Auskleidung bei der erwünschten Geometrie;
e) Aufbringen eines Drucks (21) innerhalb der erhitzen eingehüllten Auskleidung (1), während das Verformungswerkzeug (20) geschlossen wird, um das Verbundmaterial (11) und die Auskleidung (1) gegen die durch die Form definierte Geometrie zu konsolidieren unter Beibehalten der eingehüllt Auskleidung bei der erwünschten Geometrie;
f) Aufrechterhalten des Innendrucks (21) in der sich abkühlenden eingehüllten Auskleidung, bis das thermoplastische Verbundmaterial (11) ausreichend unterhalb der Schmelztemperatur(Tm) des thermoplastischen Verbundmaterials liegt; und
g) Entfernen der geformten hohlen Verbundstruktur oder des Gefäßes aus der Form.

2. Verfahren nach Anspruch 1, wobei nach Schritt a) vor der Einhüllungsphase Einlegeteile (2) auf der Auskleidung (1) positioniert werden und wobei vor Schritt c) der eingehüllte Verbundstoff auf den positionierten Einlegeteilen (2) konsolidiert wird.

3. Verfahren nach Anspruch 2, wobei die Einlegeteile (2) eine Arbeitstemperatur aufweisen, derart, dass die kritischen Dimensionen durch die Temperatur der Erhitzungsphase während Schritt c) nicht verzerrt werden.

4. Verfahren nach einem der Ansprüche 2 oder 3, wobei der eingehüllte Verbundstoff örtlich auf den positionierten Einlegeteilen (2) konsolidiert wird.

5. Verfahren nach einem der vorhergehenden Ansprüche, wobei während Schritt b) eine oder mehrere Auskleidungen (1) auf die gleiche Einhüllungslinie positioniert werden unter Bildung eines Kontinuevorgangs

6. Verfahren nach einem der vorhergehenden Ansprüche, wobei in Schritt e) ein Schnellkopplungsgerät für das schnelle Anschließen des Innendrucks (21) verwendet wird.

7. Verfahren nach Anspruch 6, wobei ein Schnellgasanschluss-System mit einem integralen Druckluftzylinder zum Aufbringen des Innendrucks (21) verwendet wird, wobei ein kegelförmiges Teil (23) mit einem axialen Loch in die Auskleidung (1) gegen einen Block mit einem profilierten Innenradius auf einem axialen Loch gedrückt wird, wobei eine Abdichtung gegen das Auskleidungsmaterial gebildet wird.

8. Verfahren nach einem der vorhergehenden Ansprüche, wobei die thermoplastische Auskleidung (1) und/oder das thermoplastische Verbundmatrixmaterial (11) aus der Gruppe ausgewählt wird bestehend aus Polypropylen, Polyamid, insbesondere Polyamid 12, Polyethylen, vernetztem Polyethylen, Polybutylenterephthalat, Polyethylenterephthalat, Polyoxymethylen, Polyphenylensulfid und Polyetheretherketon.

9. Verfahren nach einem der vorhergehenden Ansprüche, wobei während Schritt a) die thermoplastische Auskleidung (1) durch Extrusionsblasformen oder Rotationsgießen hergestellt wird.

10. Verfahren nach einem der vorhergehenden Ansprüche, wobei während Schritt a) Polymere hoher Molmasse zum Erhöhen der Schmelzstärke der thermoplastischen Auskleidung (1) verwendet werden.

11. Verfahren nach einem der vorhergehenden Ansprüche, wobei während Schritt a) diskontinuierliche verstärkende Fasern zum Erhöhen der Schmelzstärke der thermoplastischen Auskleidung (1) verwendet werden.

12. Verfahren nach einem der vorhergehenden Ansprüche, wobei während Schritt a) diskontinuierliche verstärkende Fasern als Teil der lasttragenden Funktion der hohlen Verbundstruktur oder des Gefäßes verwendet werden.

13. Verfahren nach einem der vorhergehenden Ansprüche, wobei während Schritt b) Verbundmaterial um die Auskleidung (1) durch Verfahren gewickelt wird, die das Filamentverstärken, Flechten, maßgeschneiderte Flechten, 3-D-Flechten, Einhüllen mit Stoffen oder breiten Bändern umfassen.

14. Verfahren nach einem der vorhergehenden Ansprüche, wobei während Schritt b) eine endgültige Schicht Material zum Maßschneidern von Oberflächeneigenschaften zugegeben werden kann.

15. Verfahren nach einem der vorhergehenden Ansprüche, wobei vor Schritt c) der eingehüllte Verbundstoff wahlweise über die Schmelztemperatur des Verbundstoffs (Tm) so erhitzt wird, dass das spontane Benetzen der Verstärkung durch Kapillarwirkung so stattfindet, dass eine teilweise Imprägnierung erfolgt und das Volumen des Verbundmaterials reduziert wird.

16. Verfahren nach einem der vorhergehenden Ansprüche, wobei während Schritt c) ein Temperaturgradient während der Heizphase so eingeleitet wird, dass die Außenschichten der eingehüllten Verbundmaterialien ausreichend über der Schmelztemperatur (Tm) der Matrix liegen, um die Imprägnierung zu maximieren, während ein Abbau vermieden wird, während die thermoplastische Auskleidung (1) bei einer Temperatur über dem Schmelzpunkt der thermoplastischen Auskleidung gehalten wird derart, dass das Material verformbar ist, jedoch eine ausreichende Schmelzstärke für die Handhabung während der folgenden Schritte beibehält.

17. Verfahren nach einem der vorhergehenden Ansprüche, wobei in Schritt c) ein Ofensystem für derartige Erhitzungszyklen aus einem kombinierten Zwangsheißgasund Infrarotofensystem besteht, das das Feineinstellen des Temperaturprofils durch die gesamte Dicke ermöglicht.

18. Verfahren nach einem der vorhergehenden Ansprüche, wobei während Schritt c) ein geringer Innendruck (21) innerhalb der Auskleidung während des Erhitzungszyklus aufrechterhalten werden kann, um die Gestalt der Auskleidung (1) beizubehalten.

19. Verfahren nach einem der vorhergehenden Ansprüche, wobei während Schritt c) die eingehüllte Auskleidung bei der erwünschten Geometrie gehalten wird unter Zuhilfenahme eines Rahmens, der die eingehüllte Auskleidung einklemmt, was die Überführung des erhitzen Aufbaus in das Verformungswerkzeug (20) ermöglicht.

20. Verfahren nach einem der vorhergehenden Ansprüche, wobei während Schritt e) die erhitzte eingehüllte Auskleidung zwischen den beiden Formhälften derart positioniert ist, dass ein Kontakt der beiden Formhälften im Wesentlichen gleichzeitig erfolgt.

21. Verfahren nach einem der vorhergehenden Ansprüche, wobei während Schritt b) die eingehüllte Auskleidung wahlweise über die Schmelztemperatur (Tm) des Verbundstoffs so erhitzt wird, dass das spontane Benetzen der Verstärkung durch Kapillarwirkung so stattfindet, dass eine teilweise Imprägnierung erfolgt und das Volumen des Verbundmaterials reduziert wird.

22. Verfahren nach einem der vorhergehenden Ansprüche, wobei eine hohle Verbundstruktur oder ein Gefäß mit integralen Einlegeteilen hergestellt wird, was das Anschließen externer Merkmale erlaubt.

23. Verfahren nach einem der vorhergehenden Ansprüche, wobei eine hohle Verbundstruktur oder ein Gefäß mit einer integralen thermoplastischen Auskleidung hergestellt wird.

## Revendications

1. Procédé non-isothermique pour la fabrication de structures composites creuses ou de récipients comprenant les étapes suivantes:
(a) la préformation d'un revêtement intérieur thermoplastique creux (1);
(b) le recouvrement du revêtement intérieur thermoplastique (1) avec un matériau composite thermoplastique (11);
(c) le chauffage du revêtement intérieur dans un four à température supérieure à la température de fusion Tm du matériau composite thermoplastique (11), ce qui permet d'obtenir une géométrie souhaitée du revêtement intérieur recouvert (11) ;
(d) le placement du revêtement intérieur recouvert préalablement chauffé dans un moule maintenu à température inférieure à la température de fusion Tm du matériau composite thermoplastique (11) ce qui conserve ladite géométrie souhaitée du revêtement intérieur recouvert ;
(e) l'application d'une pression interne (21) à l'intérieur du revêtement intérieur recouvert qui a été préalablement chauffé (1) pendant que le moule (20) est fermé afin de consolider le matériau composite (11) et le revêtement intérieur (1) contre la géométrie définie par le moule, ce qui conserve ladite géométrie du revêtement intérieur recouvert;
(f) la conservation de la pression interne (21) à l'intérieur du revêtement intérieur recouvert en cours de refroidissement jusqu'à ce que la température du matériau composite thermoplastique (11) se trouve suffisamment inférieure à la température de fusion Tm du matériau composite thermoplastique; et
(g) le retrait de la structure creuse ou du récipient ainsi formé de l'intérieur du moule.

2. Procédé selon la revendication 1, selon lequel après l'étape a), avant la phase de recouvrement, des garnitures (2) sont posées sur le revêtement intérieur (1), et avant l'étape c), le composite recouvert est consolidé sur les garnitures introduites (2).

3. Procédé selon la revendication 2, selon lequel les garnitures (2) disposent d'une température opérationnelle telle que les dimensions critiques ne sont pas déformées par la température de la phase thermique de l'étape c).

4. Procédé selon la revendication 2 ou 3, selon lequel le composite recouvert se trouve consolidé localement sur les garnitures introduites (2).

5. Procédé selon l'une des revendications 2 ou 3, selon lequel pendant l'étape b) un ou davantage de revêtements intérieurs (1) sont placés sur la même ligne de recouvrement pour former un procédé continu.

6. Procédé selon l'une quelconque des revendications précédentes, selon lequel à l'étape e) un dispositif de couplage rapide est utilisé pour obtenir un raccordement rapide de la pression interne.

7. Procédé selon la revendication 6, selon lequel un système rapide de raccord au gaz à cylindre pneumatique interne est utilisé pour appliquer la pression interne (21), et selon lequel un membre conique (23), équipé d'une ouverture axiale, est poussé à l'intérieur du revêtement intérieur (1) contre un bloc qui dispose d'un rayon interne profilé par rapport à une ouverture axiale, et selon lequel une étanchéité est créée contre le matériau du revêtement intérieur.

8. Procédé selon l'une quelconque des revendications précédentes, selon lequel le revêtement intérieur thermoplastique (1) et/ou le matériau composite thermoplastique (11) est choisi parmi le groupe comprenant le polypropylène, le polyamide, et en particulier le polyamide 12, le polyéthylène réticulé, le téréphtalate polybutylène, le téréphtalate polyéthylène, le polyoxyméthylène, le sulfure de polyphénylène, et le polyétheréthercétone.

9. Procédé selon l'une quelconque des revendications précédentes, selon lequel à l'étape a) le revêtement intérieur thermoplastique (1) est produit moyennant extrusion au moulage par soufflage ou à la coulée rotative.

10. Procédé selon l'une quelconque des revendications précédentes, selon lequel à l'étape a) des polymères de poids moléculaires élevés sont utilisés pour augmenter la résistance à la température de fusion du revêtement intérieur thermoplastique(1).

11. Procédé selon l'une quelconque des revendications précédentes, selon lequel à l'étape a) des fibres discontinues de renforcement sont utilisées pour faire augmenter la résistance à température de fusion du revêtement intérieur thermoplastique (1) .

12. Procédé selon l'une quelconque des revendications précédentes, selon lequel à l'étape a) des fibres discontinues de renforcement sont utilisées comme une partie de la fonction porteuse de la structure composite creuse ou du récipient.

13. Procédé selon l'une quelconque des revendications précédentes, selon lequel à l'étape b) le revêtement intérieur (1) est recouvert de matériau composite moyennant des procédés qui incluent le moulage par enroulement, le tressage, le tressage sur mesure, le tressage 3-D, le recouvrement de tissus ou de larges bandes.

14. Procédé selon l'une quelconque des revendications précédentes, selon lequel à l'étape c) une couche finale de matériau peut s'ajouter pour ajuster les propriétés de la surface.

15. Procédé selon l'une quelconque des revendications précédentes, selon lequel avant l'étape c) le composite recouvert est éventuellement chauffé à une température supérieure à la température de fusion Tm du composite, de sorte que se produit un mouillage spontané du renforcement moyennant action capillaire, et de sorte qu'une imprégnation partielle se produit et la plupart du matériau composite se trouve réduit.

16. Procédé selon l'une quelconque des revendications précédentes, selon lequel à l'étape c) un gradient de température est introduit pendant la phase thermique, de sorte que la température des couches extérieures des matériaux composites (11) se trouve suffisamment supérieure à la température de fusion Tm de la matrice, afin d'optimiser l'imprégnation tout en évitant la dégradation pendant que le revêtement intérieur thermoplastique (1) est maintenu à température supérieure à la température de fusion du revêtement intérieur thermoplastique, de sorte que le matériau demeure déformable tout en conservant une résistance à la température de fusion pour les manipulations qui se produisent aux étapes ultérieures.

17. Procédé selon l'une quelconque des revendications précédentes, selon lequel à l'étape c) un système de fours destiné à de tels cycles thermiques comprend un ensemble à gaz soufflé chaud et à infra rouge permettant de régler le profile d'alimentation des températures par rapport à l'épaisseur.

18. Procédé selon l'une quelconque des revendications précédentes, selon lequel à l'étape c) une faible pression interne (21) est maintenue à l'intérieure du revêtement intérieur au cours du cycle thermique afin de conserver la forme du revêtement intérieur (1).

19. Procédé selon l'une quelconque des revendications précédentes, selon lequel à l'étape c) le revêtement intérieur recouvert est maintenu selon la géométrie souhaitée en se servant d'un cadre qui cale le revêtement intérieur recouvert, ce qui permet de transférer l'assemblage chauffé à l'outil de moulage (20).

20. Procédé selon l'une quelconque des revendications précédentes, selon lequel à l'étape e) le revêtement intérieur recouvert, qui a été préalablement chauffé, se trouve placé entre les deux moitiés du moule, de sorte que le contacte entre les deux moitiés du moule se produit essentiellement simultanément.

21. Procédé selon l'une quelconque des revendications précédentes, selon lequel à l'étape b) le composite recouvert est éventuellement chauffé à température supérieure à la température de fusion Tm du composite, de sorte que se produit un mouillage spontané du renforcement moyennant action capillaire, de sorte qu'une imprégnation partielle se produit et la plupart du matériau composite se trouve réduit.

22. Procédé selon l'une quelconque des revendications précédentes, selon lequel une structure composite creuse ou un récipient est produit avec des garnitures intégrées permettant la connexion de propriétés périphériques.

23. Procédé selon l'une quelconque des revendications précédentes, selon lequel une structure composite creuse ou un récipient est produit équipé d'un revêtement intérieur intégré.
